# EUROPEAN PATENT APPLICATION

(11) **EP 2 475 065 A1**
(43) Date of publication of application: **11.07.2012**
(21) Application number: 09848888.5
(22) Date of filing: 15.12.2009
(51) Int. Cl.: H02J 7/02

(54) **WIRELESS RECHARGEABLE BATTERY AND WIRELESS CHARGER**

(30) Priority: 02.09.2009 CN 200910090656; 02.09.2009 CN 200910090655
(71) Applicant: aigo Digital Technology Co., Ltd., North 4th Ring Road Haidian Beijing 100080 (CN); Lin, William, San Jose, CA 95131 (US)
(72) Inventor: LIN, William, San Jose, CA 95131 (US)
(74) Representative: Gunzelmann, Rainer
(86) International application number: PCT/CN2009/075587
(87) International publication number: WO 2011/026283

(57) **Abstract**

A wireless rechargeable battery (100, 100') and a wireless charger (2). The wireless rechargeable battery (100, 100') comprises a cell unit (101, 101') for electric energy storage and an electronic circuit system connected with the cell unit (101, 101'). The electronic circuit system is used for supplying electric energy to the cell unit (101, 101'). The wireless rechargeable battery (100, 100') also comprises an induction unit (400) connected to the electronic circuit system and provided with one or more inductance coils (107). It is convenient for users to charge by the wireless rechargeable battery without a charging interface. The aesthetics of a power-driven apparatus provided with the wireless rechargeable battery (100, 100') is improved and the service life thereof is prolonged.

## Description

### FIELD OF THE INVENTION

The present invention relates to battery and a charging apparatus, and more particularly to a wireless rechargeable battery and a wireless charger charging for the wireless rechargeable battery.

### BACKGROUND OF THE INVENTION

At present, portable electronic apparatuses such as Moving Picture Experts Group Audio Layer-3 player (MP3 player), mobile phone and Personal Digital Assistant (PDA) have charging batteries therein, so that users may use the portable electronic apparatuses while moving. In such a portable electronic apparatus, a specific charger for charging the rechargeable battery is separately equipped. The charger is connected to a common power source through a cable and then connected to and charges the rechargeable battery. In order that the charger may provide a charging current to the rechargeable battery of the portable electronic apparatus, the charger should be electrically connected to the rechargeable battery of the portable electronic apparatus. In order to electrically connect the charger and the portable electronic apparatus or the rechargeable battery, corresponding connecting ports should be respectively disposed in the charger and the portable electronic apparatuses. A corresponding conductive terminal is disposed inside the port, to transmit electric energy.

However, the disposition of the conductive terminals inside the charger and the portable electronic apparatus should be in coordination with ports, and dusts and external impurities easily enter the ports, resulting in poor contact between the terminals.

### SUMMARY OF THE INVENTION

The technical problem to be solved by the present invention is to provide a wireless rechargeable battery and a wireless charger charging for the wireless rechargeable battery.

A wireless rechargeable battery comprises a charging battery unit for storing electric energy, an electronic circuit system connecting with said charging battery unit. The wireless rechargeable battery further includes an induction unit connecting with said electronic circuit system and having one or more induction coils.

Certain exemplary embodiments can provide a wireless rechargeable battery further including an adapter.

Certain exemplary embodiments can provide a wireless rechargeable battery, in which the induction current produced by the induction unit in an alternating magnetic field can be transmitted to circuit terminals of the wireless rechargeable battery.

Certain exemplary embodiments can provide a wireless rechargeable battery, in which the adapter includes an adapter body, a first circuit contact electric connecting with the circuit terminals of the wireless rechargeable battery, and a second circuit contact electric connecting with a battery slot of an electric appliance.

Certain exemplary embodiments can provide a wireless rechargeable battery, in which the electronic circuit system includes a power receiving circuit and positive-negative pole apparatus so that the power can be supplied from the circuit terminals of the positive-negative pole apparatus to the battery unit.

Certain exemplary embodiments can provide a wireless rechargeable battery, in which the induction unit includes a voltage-stabilizing circuit, the voltage-stabilizing circuit including a rectification module and a filter module providing a rectified and filtered induction alternative current to the electronic circuit system.

Certain exemplary embodiments can provide a wireless rechargeable battery, in which the adapter body has a frame with closed side and its shape and size matched with its electrical appliance.

Certain exemplary embodiments can provide a wireless rechargeable battery, in which the frame engaged with the battery unit tightly and the adapter body has a frame with three continue sides.

Certain exemplary embodiments can provide a wireless rechargeable battery, in which the adapter body being a recess with a bottom to locate the wireless rechargeable battery.

Certain exemplary embodiments can provide a wireless rechargeable battery, in which the first circuit contact is provided at any of the side wall around the recess or at the bottom of the recess.

Certain exemplary embodiments can provide a wireless rechargeable battery, in which the adapter body is a cup provided at one side of the wireless rechargeable battery where circuit contacts located.

Certain exemplary embodiments can provide a wireless rechargeable battery, in which the cup with two extended sidewall.

Certain exemplary embodiments can provide a wireless rechargeable battery, in which the adapter body has a mounting recess for free of connecting in wrong directions.

Certain exemplary embodiments can provide a wireless rechargeable battery, in which the induction coils are disposed on each layer of multilayer print circuit board, and the induction coils on the adjacent layers are interconnected.

Certain exemplary embodiments can provide a wireless rechargeable battery, in which two or more said induction coils provided in each layer of the printed circuit board.

Certain exemplary embodiments can provide a wireless rechargeable battery, in which the induction coils in the layer of the printed circuit board are connected with each other and winded clockwise or anti-clockwise.

Certain exemplary embodiments can provide a wireless rechargeable battery, in which the induction coils aligned each other in a direction vertical with the board.

Certain exemplary embodiments can provide a wireless rechargeable battery, in which induction coils winded around a conduct and form a stacking three-dimensional coil group in the vertical direction.

Certain exemplary embodiments can provide a wireless rechargeable battery, in which the power receiver circuit including a voltage-stabilizing circuit.

Certain exemplary embodiments can provide a wireless rechargeable battery, in which the induction unit and said battery unit or said adapter body are curing together.

Certain exemplary embodiments can provide a wireless rechargeable battery, in which the voltage-stabilizing circuit being made in a thin film; the induction unit including the film providing the induction coils and the voltage-stabilizing circuit; an adhesive label being provided on the side of the film away from the induction coils to adhesive the induction unit to the battery unit or the adapter.

Certain exemplary embodiments can provide a wireless rechargeable battery, in which the induction unit includes a charge receiving plate which is located in the bottom or sidewall of the charging battery unit.

Certain exemplary embodiments can provide a wireless rechargeable battery, in which the wireless rechargeable battery includes a shielding plate on the outside wall of the charging battery unit.

Certain exemplary embodiments can provide a wireless rechargeable battery, in which the shielding plate being on the side of the charging battery unit opposite to the charge receiver plate.

Certain exemplary embodiments can provide a wireless rechargeable battery, in which the wireless rechargeable battery includes an insulating plate positioned on the side of the charging battery unit same with the charge receiver plate.

Certain exemplary embodiments can provide a wireless rechargeable battery, in which the wireless rechargeable battery includes a magnetic plate positioned between the shielding plate and the charge receiver plate.

Certain exemplary embodiments can provide a wireless rechargeable battery, in which the wireless rechargeable battery has a metal case, and a shielding layer is provided outside the metal case and absorb the magnetic to prevent the case of the wireless rechargeable battery from absorbing the magnetic

A wireless charger comprises a holder for locating a wireless rechargeable battery or an electric appliance using a wireless rechargeable battery. The wireless rechargeable battery further including a set extending from one side of the holder

Certain exemplary embodiments can provide a wireless charger in which the primary circuit is provided in the holder.

Certain exemplary embodiments can provide a wireless charger in which an indication region is provided in the set to indicate charging state.

Certain exemplary embodiments can provide a wireless charger in which two or more primary coils are provided.

Comparing with the existing technology, the present invention provides a wireless rechargeable battery and a wireless charger can charging without inserting and easy to use. The portable electronic apparatus can be charging without ports and avoid the situation that the portable electronic apparatus is useless once the port damaged, so that the duration of the portable electronic apparatus can be improved.

### BRIEF DESCRIPTION OF THE DRAWING

FIG 1 is a structural view of a socket according to an existing mobile battery.
FIG 2 is an exploded view of an exemplary wireless rechargeable battery ;
FIG 3 is a structural view of the voltage-stabilizing circuit of another exemplary wireless rechargeable battery.
FIG 4 is a bock diagram of the induction unit of another exemplary wireless rechargeable battery.
FIG 5 is a structural view of the voltage-stabilizing circuit of another exemplary wireless rechargeable battery.
FIG 6 shows the disposition of the induction coils of another exemplary wireless rechargeable battery.
FIG 7 shows the disposition of the induction coils of another exemplary wireless rechargeable battery.
FIG 8 shows exemplary embodiment of the wireless rechargeable battery.
FIG 9 shows an adapter of another exemplary wireless rechargeable battery.
FIG 10 shows an adapter of another exemplary wireless rechargeable battery.
FIG 11 shows an adapter of another exemplary wireless rechargeable battery.
FIG 12 shows an adapter of another exemplary wireless rechargeable battery.
FIG 13 shows an adapter of another exemplary wireless rechargeable battery.
FIG 14 is a solid view of another exemplary wireless charger.
FIG 15 shows a primary coil of another exemplary wireless charger.
FIG 16A shows the magnetic density curve produced by a single primary coil of another exemplary wireless charger.
FIG 16B shows the magnetic density curve produced by a two primary coil of another exemplary wireless charger.

### DETAILED DESCRIPTION OF THE EMBODIMENTS

The preferred embodiments of the present invention are described below with reference to the accompanying drawings

A wireless rechargeable battery 100 of the present invention includes a charging battery unit 101 for storing electric energy and an electronic circuit system connecting with the charging battery unit 101. The electronic circuit system is used for supplying electric energy for the charging battery unit 101. The electric circuit system is connected with an induction unit 400.

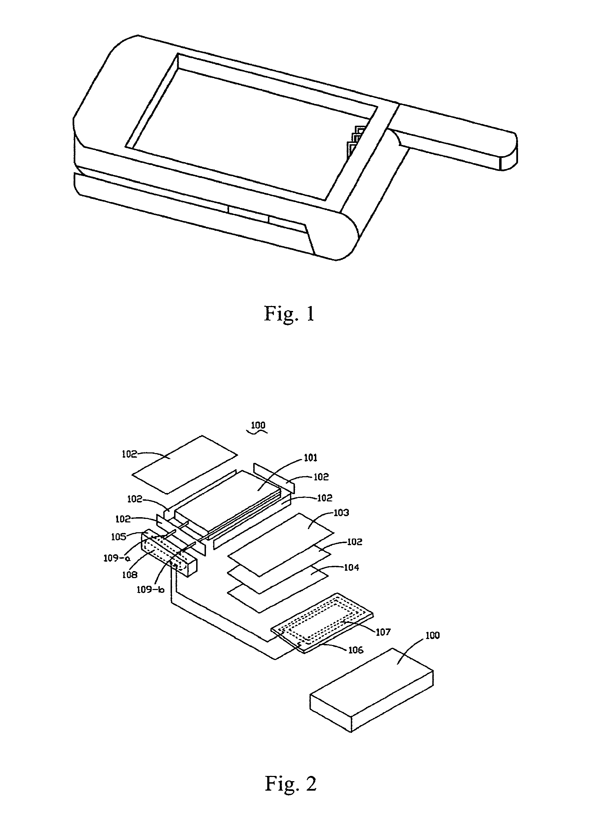

FIGS 2 shows an exemplary embodiment of a wireless rechargeable battery 100. Referring to FIG 2, the wireless rechargeable battery 100 comprises the charging battery unit 101 for storing electric energy, shielding plates 102 provided outside the charging battery unit 101, the electronic circuit system, a shielding member 105, an insulating plate 103 provided between the shielding plates under the charging battery unit 101 and the underside of the charging battery unit 101, a magnetic plate 104, a charge receiving plate 106, and a battery cell case. The shielding plates are provided around the charging battery unit 101 to cut off the magnetic field therearound. The electronic circuit system comprises a power receiver circuit 108 and the anode and cathode 109-a and 109-b respectively. The power receiver circuit 108 is connected with the charging battery unit 101 by the anode and cathode 109-a and 109-b and provides the charging battery unit 101 electric energy. The shielding member 105 accommodates the power receiver circuit 108 and preventing its surrounding magnetic field. The insulating plate 103 may be formed of thin mesh or insulator to release the energy produced by the charging battery unit 101 and avoids high temperature of the charging battery unit 101. The magnetic plate 104 is formed between the shielding plates 102 and the charge receiving plate. The magnetic plate 104 has a high transmission to facilitate the magnetic field of the induction coils in the wireless rechargeable battery 2 being induced to the induction coils of the charge receiving plate 106. The battery cell case constitutes an outer body of induction charging apparatus. The battery cell case is preferred to form by nonmetal since the metal case may absorb the magnetic field around the charging apparatus and cause low charging efficiency. The charge receiving plate 106 can be set on the any side of the charging battery unit 101. The insulating plate 103 and the magnetic plate 104 can be provided according to the charge receiving plate 106. The power receiver circuit includes existing rectification voltage-stabilizing circuit and filter voltage-stabilizing circuit. In an exemplary embodiment, only one shielding plate 102 can be provided. The shielding plate 102 and the charge receiving plate 106 are on the opposite sides of the charging battery unit 101.

The above charge receiving plate 106 is an exemplary embodiment of the induction unit 400. One or more induction coils 107 can be provided in the charge receiving plate 106.

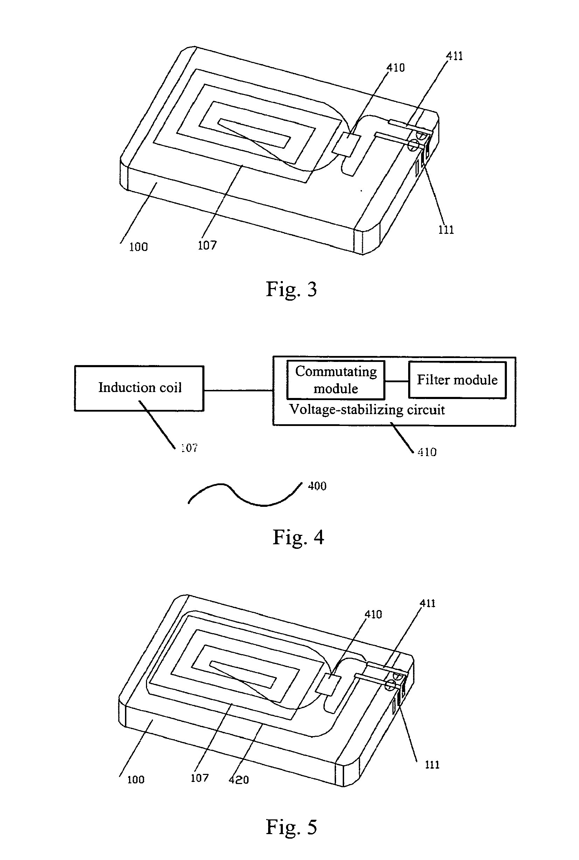

Referring to FIG 3 and FIG 4, the induction unit 400 of the present invention comprises an induction coils 107 and voltage-stabilizing circuit 410. The voltage-stabilizing circuit 410 can be provided inside and as a part of the power receiver circuit 108. The induction coils 107 can be FPCB, PCB, coil and ferrite. The shape of the induction coils may include a round shape, a quadrangle shape and a polygon shape. The induction coils can be a flat monolayer coil having multi-turns, a multilayer coil having multi-turns, a screw coil, flat series coils, or flat parallel coils. The induction coils 107 can be wind around a magnetic core to improve the induction efficiency. There is no limitation of the wind manner.

Alternating current (AC) is generated by the alternating magnetic formed by the induction coils 107. The inducted current is sent to the voltage-stabilizing circuit 410. The two circuit terminals 123 of the power supply introduced by the voltage-stabilizing circuit 410 connect the positive terminal, negative terminal and test terminal.

The voltage-stabilizing circuit 410 rectifies and filters the inducted current and then sends a suitable current to the wireless rechargeable battery 100 according with its working voltage so as to charge the wireless rechargeable battery 100. The voltage-stabilizing circuit 410 includes the rectification module and filter module. In another exemplary embodiment, the voltage-stabilizing circuit can be a thin disc. Referring to FIG 3, the thin disc and the induction coils 107 is incorporated. The technology of providing the voltage-stabilizing circuit as a thin disc is known. The voltage-stabilizing circuit is made to be thin so as to decrease the thickness of the induction unit 400.

The induction unit 400 of the present invention can be accommodated into the case of the wireless rechargeable battery 100 and incorporated therewith. The induction unit 400 can further include a film 420. Referring to FIG 5, the film 420 loads the winded induction coils 107 and the thin disc of voltage-stabilizing circuit. An adhesive label is provided on the side of the film 420 away from the induction coils 107. The induction unit 400 are stick to the case of the wireless rechargeable battery 100 by the adhesive label on the film, so as to achieve an easy assembly of the wireless rechargeable battery and low cost of manufacture.

The exemplary embodiments of the disposition of the induction coils 107 in the induction unit 400 are illustrated as blow.

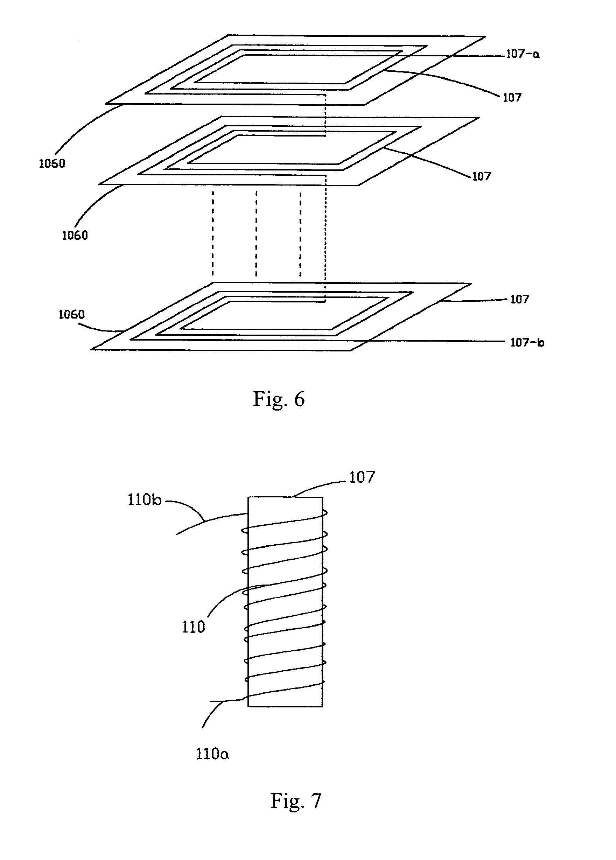

FIG 6 shows the disposition of the induction coils 107 of another an exemplary wireless rechargeable battery. A coil is disposed on each layer of printed circuit board of the multilayer printed circuit board 1060. The coils on the adjacent layers are interconnected. Each coil has multi-turns and the same winding direction, e.g. the coils on each layer of the printed circuit board are wind all clockwise or all anti-clockwise. The coil may be disposed as the follows: metal films of copper or aluminum with desirable conductivity are stacked on each layer of substrate of the multilayer printed circuit board, or stacked on a winding film made of polyimide and etched into a pattern shown in FIG 6. The multilayer printed circuit board 1060 is disposed with coil 107. In the vertical direction, the coils are interconnected forming a stacking three-dimensional coil group. In a horizontal direction, each coil may be wind for multi-layers as required. Therefore, the number of turns in the vertical direction and horizontal direction can be increased at the same time, which effectively improves the charging efficiency and further decrease the thickness of the power receiver circuit. In another exemplary embodiment, two or more interconnected coils may be disposed on each layer of printed circuit board of the multilayer printed circuit board. The multilayer printed circuit board 1060 is electrical connected respectively with the charging battery unit 101 by the anode and cathode 109-a and 109-b introduced therefrom. In a preferred embodiment, the multilayer printed circuit board is a soft multilayer printed circuit board.

FIG 7 shows exemplary embodiment of the disposition of the induction coils 107. A conduct 110 is winded around a locating column 11 in a certain direction, to form a stacking three-dimensional coil group in the vertical direction. The conduct 110 may be winded on the locating column 11 for multiple layers to increase the number of turns, and two ends of the conduct 110-a and 110-b are respectively connected to an anode and a cathode of the charging battery unit. Two or more interconnected can be positioned in the charge receiving plate 106. Each coil 107 has the same winding direction, e.g. the coils on each layer are wind all clockwise or all anti-clockwise. The conduct 110 can wind in a certain direction to form a hollow core without the locating column 11.

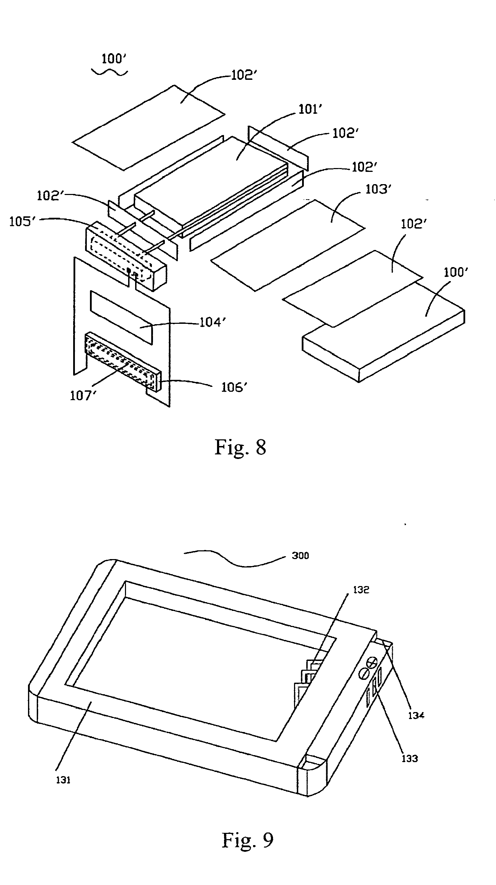

FIG 8 shows exemplary embodiment of the wireless rechargeable battery, e.g. the wireless rechargeable battery 100'. The charging battery unit 101', the shielding plated 102' surround the charging battery unit 101', the shielding member 105' at the side of the charging battery unit, the power receiver circuit 108, and the insulating plate 103' at the bottom of the charging battery unit of the wireless rechargeable battery 100' are the same as the above embodiment. The difference are as below, the charge receiving plate 106' is located at the power receiver circuit 108' side. The magnetic plate 104' is between power receiver circuit 108' and charge receiving plate 106'. The induction coils 107' of the charge receiving plate 106' can be positioned as in the above embodiments. The case formed by nonmetal constitutes an outer body of wireless rechargeable battery 100'.

FIG 9 shows exemplary embodiment of the wireless rechargeable battery. The wireless rechargeable battery100 or 100' has an adapter 300 which can accommodate wireless rechargeable battery.

The charging battery unit can be a lithium-ion battery, a NIMH battery, a Nickel-Cadmium battery, oxide battery and polymer battery. The voltage of wireless rechargeable battery 100 or 100' includes 1.2V, 3.0V, and 3.75V. Since the metal case of the wireless rechargeable battery 100 or 100' will generate energy by vortex in alternating magnetic and to damage the wireless rechargeable battery, the case of the wireless rechargeable battery 100 or 100' can be formed of nonmetal. A shielding layer capable of absorbing the magnetic can be provided on the metal case of the induction unit 400 and the wireless rechargeable battery 100 or 100'. The wireless rechargeable battery 100 or 101' can have three or four circuit contacts 111 connecting anode and cathode 109-a and 109-b. The circuit contacts can include the positive terminal, negative terminal and test terminal. As exemplary embodiments shown in FIG 3 and FIG 5, the circuit contacts may contain three or four terminals.

The wireless rechargeable battery 100 or 100' can be formed in different models according to voltages. The same model of the wireless rechargeable battery 100 or 100' means it has the same shape, size and its circuit contacts has same disposition. The present invention provides wireless rechargeable batteries under different voltages and adapters with different models for charging apparatuses with same model to solve the problem of using the wireless rechargeable battery to substitute the different models of the existing battery. As a result, the manufacture cost of the battery is lower and the compatibility of the wireless rechargeable battery is improved.

Under the circumstance of the wireless rechargeable battery is compatible, the present invention provides an adapter 300 matching charging apparatus socket and providing the wireless rechargeable battery.

As shown is FIG 9, an adapter 300 has an adapter body 131. The size and the shape of the adapter body 131 can match with its electrical appliance inserted in it. The shape of the adapter body may be rectangle, round or alike. The adapter 300 includes connected circuit contacts. They are a first circuit contact 132 and a second circuit contact 133 for conducting electricity. The first circuit contact 132 and the second circuit contact 133 are provided with a positive terminal, a negative terminal and a test terminal respectively. The adapter body 131 may have a mounting recess 134 for free of connecting in wrong directions.

An illustrating embodiment of the adapter 300 is shown in FIG 9. The adapter body 131 is a frame with closed sides. The first circuit contact may be a metal plate. After its setting in the frame, the wireless rechargeable battery 100 or 100' may charge with connecting of the circuit contact 111 of the wireless rechargeable battery 100 or 100' and the first circuit contact 133. In a preferred embodiment the frame and the wireless rechargeable battery can interlock tightly for conductance stability between the wireless rechargeable battery 100 or 100' and the adapter 300.

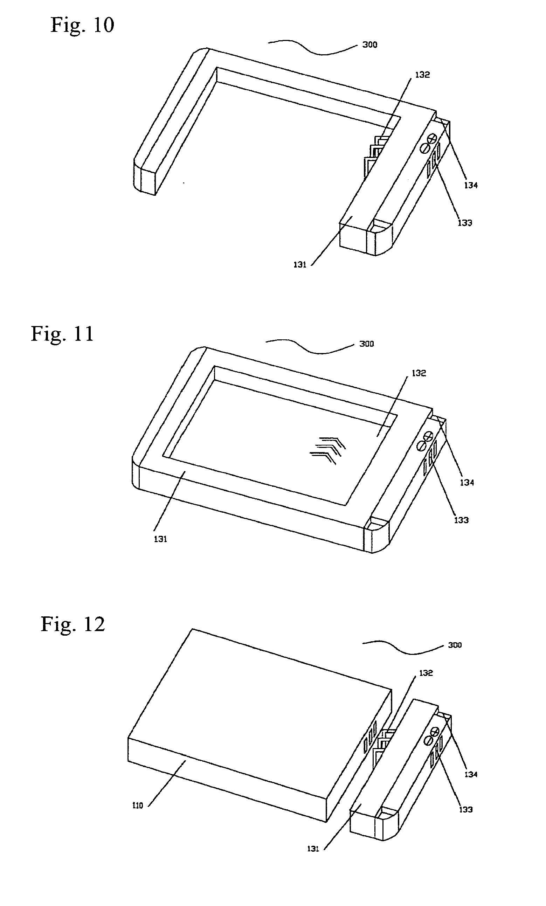

According to another exemplary embodiment of the adapter 300 shown in FIG 10, the adapter body 131 includes a frame with three continue sides. The size of the frame can be matched with the appliance used. The wireless rechargeable battery 100 or 100' may be engaged in the frame therefore provide the electrical connection between the wireless charging 100 or 100' and the appliance.

According to still other exemplary embodiment of the adapter 300 shown in FIG 11, the adapter body 131 is a recess with a bottom to locate the wireless rechargeable battery 100 or 100'. As an exemplary respect of the wireless charge battery, the first circuit contact 133 may be provided at any of the side wall around the recess or at the bottom of the recess. As the other exemplary respect of the wireless charge battery, the second circuit contact 134 may be provided at the outside wall to the adapter body 131 for electric connecting with the circuit terminals in the appliance battery slot. In a preferred embodiment, the second circuit contact 134 is a metal flat terminal.

According to still other exemplary embodiment of the adapter 300 shown in FIG 12, the adapter body 131 is a cup. The cup is provided at one side of the wireless rechargeable battery where the circuit contacts 111 located. Without saying the circuit terminals are provided in the cup. The cup can be engaged with the wireless rechargeable battery 100 or 100'. The cup can change the shape of the wireless rechargeable battery 100 or 100', for example, changing the width and length of the wireless rechargeable battery. The induction unit 400 can be provided in the surface or inside of the cup. The two circuit terminals 123 of the induction unit 400 can connect with the circuit terminals 111 of wireless rechargeable battery.

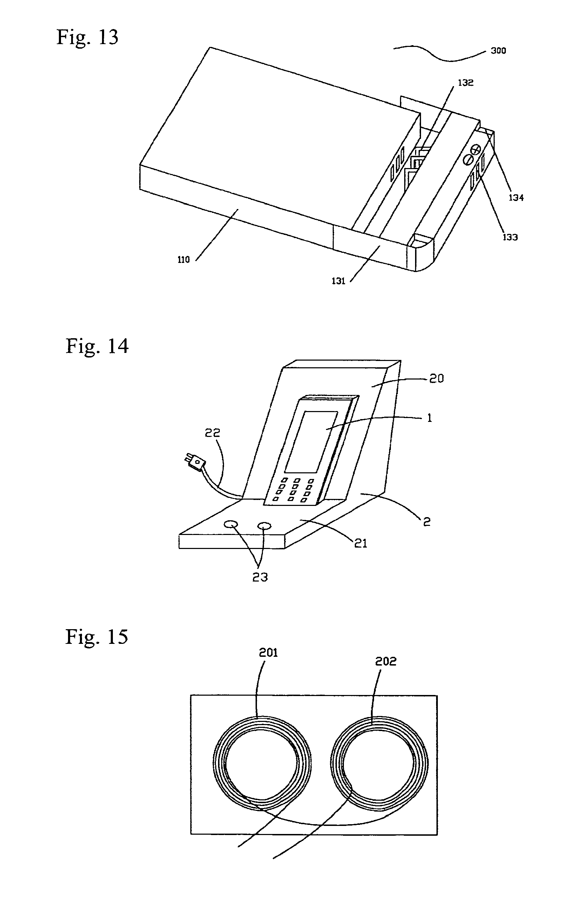

According to further still other exemplary embodiment of the adapter 300 shown in FIG 13, the adapter body 131 is a cup with two extended sidewall including a left sidewall and a right sidewall for engaging the wireless rechargeable battery.

According to an exemplary of the wireless rechargeable battery, the induction unit for providing current via magnetic inducting may by positioned at battery unit or adapter. The wireless rechargeable battery with the adapter may be designed for fitting varies of battery core with different working voltages. The battery cores with same working voltage may design with same appearance and same size. The battery core may contain the battery unit and electronic circuit system. As the battery core is the most expensive part of the wireless rechargeable battery, the cost of the wireless rechargeable battery can be reduced via the universality of the battery cores.

The wireless rechargeable battery can be provided with different appearance and size of the adapter. The induction unit may be provided in the battery unit or the adapter of the wireless rechargeable battery.

With the provided of the adapter, the present wireless rechargeable battery can be widely used with the less cost and complication.

As shown in FIG 14, in order to charging the portable electronic appliance, such as a mobile phone 1, the wireless charger 2 includes a holder 20, a set 21 and a circuit. As shown in FIG 15, primary coils 201 and 202 may be provided in the holder 20 for producing induction magnetic field. The set 21 extents from one side of the holder 20 to set a mobile phone 1 or its wireless rechargeable battery 100 or 100' for charging. The circuit unit provided in the holder 20 includes a primary circuit, circuits connecting with external cables and plug for getting AC/DC power supply. An indication region 23 in the set 21 shows the charging state. For example, the light can be bright in charging, and can be turned off when finish charging. Or the charging state can be shown on a display of a device in charging, and .the charging state can be automatically turned off when charging finished.

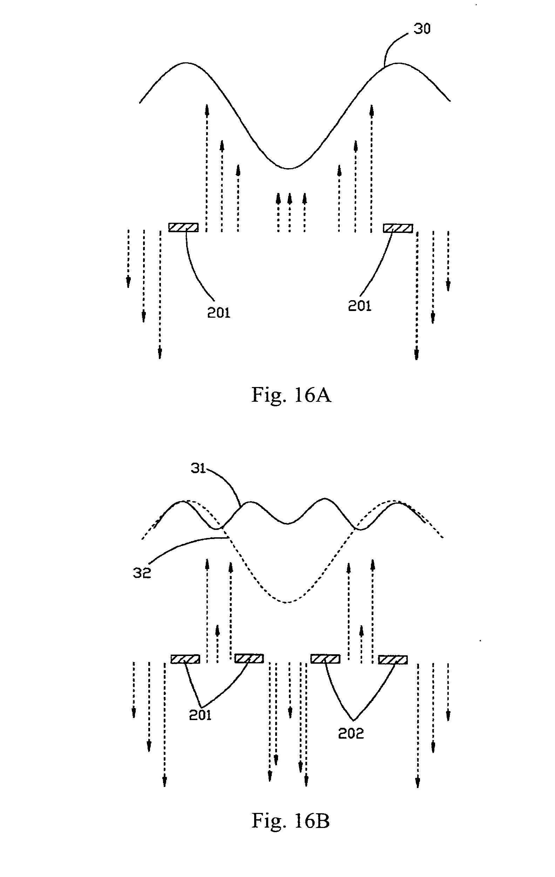

During the charging with the present wireless charger 2, the wireless rechargeable battery shown above can be located in the wireless charger 2. By using AC/DC power via the plug 22 of the wireless charger 2, the mobile phone can be charged. Or setting the wireless rechargeable battery disassembled from the mobile phone, for example, in the set 21 of wireless charger 2, the battery can be charged. One or more primary circuit can be provided in the wireless charger 2 to produce a uniformed magnetic field. As shown in FIG 16A, the magnetic density curve 30 is produced by a single primary coil 201. The magnetic density curve 31 shown in FIG 16B is produced by two primary coils 201 and 202. The curve 31 is more uniform compare with the curve 30. That means the portable electric appliance can be positioned with flexibility and more batteries or portable appliances can be charged at the same time.

The primary coils in the wireless charger may be connected in series for working at the same time. Or the primary coils can be divided into groups for controlling different circuits, and connect them in parallel. In this case, during one induction coil in charging state, the control circuit connected with the induction coils will limit the current in this induction coil and the other induction coils can keep in rest for less consumption. Without plug in or out, the appliance can be charged, that improves convenience and smooth of appearance of the portable appliance by charge interface eliminating.

As can be understood, above detailed illustration is not limited the scope of the invention. The invention is defined by the appended claims.

## Claims

1. A wireless rechargeable battery comprising a charging battery unit for storing electric energy, an electronic circuit system connecting with said charging battery unit, which **characterized in that** the wireless rechargeable battery further including an induction unit connecting with said electronic circuit system and having one or more induction coils.

2. The wireless rechargeable battery according to claim 1, wherein the wireless rechargeable battery further includes an adapter;
induction current produced by the induction unit in a alternating magnetic field can be transmitted to circuit terminals of the wireless rechargeable battery;
the adapter includes an adapter body, a first circuit contact electric connects with the circuit terminals of the wireless rechargeable battery, and a second circuit contact electrically connects with a battery slot of an electric appliance.

3. The wireless rechargeable battery according to claim 1, wherein the electronic circuit system includes a power receiving circuit and positive-negative pole apparatus so that the power can be supplied from the circuit terminals of the positive-negative pole apparatus to the battery unit.

4. The wireless rechargeable battery according to claim 2, wherein the induction unit includes a voltage-stabilizing circuit, the voltage-stabilizing circuit includes a rectification module and a filter module providing a rectified and filtered induction alternative current to the electronic circuit system.

5. The wireless rechargeable battery according to claim 2, wherein the adapter body has a frame with closed side and its shape and size matched with its electrical appliance.

6. The wireless rechargeable battery according to claim 5, wherein the frame is engaged with the battery unit tightly.

7. The wireless rechargeable battery according to claim 2, wherein the adapter body has a frame with three continue sides.

8. The wireless rechargeable battery according to claim 2, wherein the adapter body is a recess with a bottom to locate the wireless rechargeable battery.

9. The wireless rechargeable battery according to claim 8, wherein the first circuit contact is provided at any of the side wall around the recess or at the bottom of the recess.

10. The wireless rechargeable battery according to claim 2, wherein the adapter body is a cup provided at one side of the wireless rechargeable battery where circuit contacts located.

11. The wireless rechargeable battery according to claim 10, wherein the cup with two extended sidewall.

12. The wireless rechargeable battery according to any of claim 6, 7, 9 or 11, wherein the adapter body has a mounting recess for free of connecting in wrong directions.

13. The wireless rechargeable battery according to claim 3, wherein the induction coils are disposed on each layer of multilayer print circuit board, and the induction coils on the adjacent layers being interconnected.

14. The wireless rechargeable battery according to claim 13, wherein two or more said induction coils are provided in each layer of the printed circuit board.

15. The wireless rechargeable battery according to claim 14, wherein said induction coils in the layer of the printed circuit board are connected with each other and winded clockwise or anti-clockwise.

16. The wireless rechargeable battery according to claim 14, wherein said induction coils are aligned each other in a direction vertical with the board.

17. The wireless rechargeable battery according to claim 3, wherein said induction coils are winded around a conduct and form a stacking three-dimensional coil group in the vertical direction.

18. The wireless rechargeable battery according to claim 3, wherein said power receiver circuit includes a voltage-stabilizing circuit.

19. The wireless rechargeable battery according to claim 4, wherein said induction unit and said battery unit or said adapter body are curing together.

20. The wireless rechargeable battery according to claim 4, wherein said voltage-stabilizing circuit is made in a thin film; the induction unit includes the film providing the induction coils and the voltage-stabilizing circuit; an adhesive label is provided on the side of the film away from the induction coils to adhesive the induction unit to the battery unit or the adapter.

21. The wireless rechargeable battery according to claim 4, wherein the induction unit has a charge receiving plate.

22. The wireless rechargeable battery according to claim 21, wherein the charge receiving plate is located in the bottom or sidewall of the charging battery unit.

23. The wireless rechargeable battery according to claim 21, wherein includes a shielding plate on the outside wall of the charging battery unit.

24. The wireless rechargeable battery according to claim 22, wherein the shielding plate is on the side of the charging battery unit opposite to the charge receiver plate.

25. The wireless rechargeable battery according to claim 21, wherein includes a insulating plate positioned on the side of the charging battery unit same with the charge receiver plate.

26. The wireless rechargeable battery according to claim 21, wherein includes a magnetic plate positioned between the shielding plate and the charge receiver plate.

27. The wireless rechargeable battery according to any of claims 22, 24, 26 or 25, wherein a non-metal case is provided on the outside of the wireless rechargeable battery.

28. The wireless rechargeable battery according to any of claims 22, 24, 26 or 25, wherein wireless rechargeable battery has a metal case, and a shielding layer is provided outside the metal case and absorb the magnetic to prevent the case of the wireless rechargeable battery from absorbing the magnetic

29. A wireless charger including a holder for locating a wireless rechargeable battery or an electric appliance using a wireless rechargeable battery, which **characterized in that** the wireless rechargeable battery further including a set extending from one side of the holder

30. The wireless charger according to claim 29, wherein the primary circuit is provided in the holder.

31. The wireless charger according to claim 29, wherein an indication region is provide in the set to indicate charging state.

32. The wireless charger according to claim 29, wherein two or more primary coils are provided.
